# EUROPEAN PATENT SPECIFICATION

(11) **EP 3 801 009 B1**
(45) Date of publication and mention of the grant of the patent: **19.02.2025**
(21) Application number: 19814503.9
(22) Date of filing: 06.06.2019
(51) Int. Cl.: A01K 63/04, A01K 63/00, C02F 1/20, C02F 3/06, C02F 3/08, C02F 3/10, C02F 3/30

(54) **CLEANSING AND RECIRCULATING SYSTEM FOR AQUACULTURE SYSTEMS AND A METHOD FOR CLEANSING AN AQUEOUS MEDIUM FROM AN AQUACULTURE SYSTEM**
REINIGUNGS- UND RÜCKFÜHRSYSTEM FÜR AQUAKULTURSYSTEME UND VERFAHREN ZUR REINIGUNG EINES WÄSSRIGEN MEDIUMS AUS EINEM AQUAKULTURSYSTEM
SYSTÈME DE NETTOYAGE ET DE RECIRCULATION POUR SYSTÈMES D'AQUACULTURE ET PROCÉDÉ DE NETTOYAGE D'UN MILIEU AQUEUX ISSU D'UN SYSTÈME D'AQUACULTURE

(30) Priority: 06.06.2018 DK PA201870328
(43) Date of publication of application: 14.04.2021
(73) Proprietor: Assentoft Holding PDN ApS, 8960 Randers SØ (DK)
(72) Inventor: OLSEN, Flemming, 8930 Randers NØ (DK); NIELSEN, Peter Damgaard, 8000 Aarhus C (DK); BÆKGAARD, Arne, 7755 Bedsted Thy (DK)
(74) Representative: Nex & Phister Law & IP Aps
(86) International application number: PCT/DK2019/050177
(87) International publication number: WO 2019/233540

(56) References cited:
- WO-A1-03/034817
- WO-A1-03/034817
- WO-A1-2011/136660
- WO-A1-2011/136660
- CN-A- 106 007 228
- CN-A- 106 007 228
- CN-A- 108 033 587
- IL-A- 252 390
- SU-A1- 981 250
- US-A- 3 888 210
- US-A1- 2018 007 873

## Description

### Field of the Invention

The present invention relates to a cleansing system configured to receive aqueous medium from at least one fish tank and to return a cleaned aqueous medium to the at least on fish tank.

### Background of the Invention

Land based Recirculated Aquaculture Systems (RAS) are known and varieties exist and as an example, Moore discloses a fish growing tank and method in the patent literature US 4,003,337.

Cleansing systems are also known and an integrated closed loop system for water purification is known from the patent literature e.g. WO 03/065798 Al.

Document US 3888210 A discloses a fish husbandry system having a fish rearing vertically extending tank wherein the water flows in substantially laminar fashion from bottom to top.

Document WO03034817A1 discloses a process and means for processing water used in a land based farming installation. The document describes a continuously circulating process of water through different cleaning stages, by means of a cleansing system comprising an inlet to inlet aqueous medium into a first volume surrounded by an annulus section having a second volume in communication with the first volume, the annulus section further comprising an outlet to outlet cleaned aqueous medium.

Document SU981250A1 discloses a wastewater treatment system with a centralized tank and a peripheral aeration zone divided into three sectors: aeration tank, activated sludge regeneration and aerobic mineralizer.

Finally, document WO2018211513 discloses a land based water recirculating system with different treatment phases: mechanical filtration, aerobic treatment, anaerobic/ anoxic treatment, and optimally ozonation and optionally protein skimming.

Different parts or sub-systems have generally been interconnected and handled separately.

### Object of the Invention

It is an object of the invention to improve the cleansing systems of aquaculture system.

It is an object of the invention to improve a recirculation aquaculture system (RAS). Although circular systems exist, further improvements are needed to save space.

### Description of the Invention

The objects above are achieved according to the invention by a cleansing system comprising the features of independent claim 1, a method for cleansing an aqueous medium comprising the features of independent claim 11, and a recirculating aquaculture system comprising the features of independent claim 14.

Preferred embodiments of the invention are set out in the dependent claims.

A cleansing system configured to receive aqueous medium from at least one fish tank and to return a cleaned aqueous medium to the at least one fish tank, comprises a cleansing system inlet arranged at a cleansing system inlet level to inlet the aqueous medium into a first volume. The first volume is substantially surrounded by an annulus section having at second volume. The first volume and the second volume are in communication via at least a first-second-overflow leveller arranged at first-second overflow leveller level and to radially overflow the aqueous medium from the first volume to the second volume. There is a cleansing system outlet arranged in the annulus section configured to outletting the now cleaned aqueous medium from the annulus section.

This particular configuration allows for an effective distribution of an aqueous medium such as water, say in an aquaculture system, through different volumes that can be configured according to specific purposes as will be described herein.

According to the invention, the annulus section is parted in arc-sections forming at least a further third volume in the annulus section, where first volume and the third volume are in communication via at least a first-third-overflow leveller arranged at a first-third overflow leveller level and to radially overflow the aqueous medium from the first volume to the third volume.

This particular configuration allows for an effective distribution of the medium into at least three different process volumes. It further allows for the medium to be processed in parallel in the second and third volume. The arc-sections may be designed according to a certain ratio. The arc-sections may be adjustable.

A person skilled in the art will appreciate the generic concept and will be able to configure the described volumes, the first volume, the second, and the third volume according to circumstances. Preferably, the first volume is configured with a specific purpose as first reactor, e.g. as a moving bed type of configuration, the second volume is configured with a specific purpose as a second reactor, e.g. as a fixed bed type of configuration, the third volume is configured with a specific purpose as a degassing section.

According to the invention, the second volume and the third volume are in communication via at least a second-third-overflow leveller arranged at second-third overflow leveller level and to tangentially overflow the aqueous medium from the third volume to the second volume.

This further allows for mixing the medium from third volume with the medium in the second volume. This configuration saves space and energy since the arc-sections may be designed or adjusted and the tangential flow may be controlled. Thereby, a three-stage process may be implemented and the medium may simply cascade through the volumes. The volumes may be configured to optimise the desired process. The actual flow rate and/or flow ratio may easily be controlled or adjusted to achieve the desired overall process, such as cleaning a contaminated aqueous medium.

Preferably, the annulus section is parted in arc-sections forming at least a further fourth volume in the annulus section, where first volume and the fourth volume are in communication via at least a first-fourth-overflow leveller arranged at a first-fourth overflow leveller level and to radially overflow the aqueous medium from the first volume to the fourth volume.

Preferably, the third volume and the fourth volume are in communication via at least a third-fourth-overflow leveller arranged at third-fourth overflow leveller level and to tangentially overflow the aqueous medium from the fourth volume to the third volume.

Preferably, the fourth volume comprises return flow means for returning the aqueous medium from the fourth volume to the first volume as a return flow. The return flow means may be an arrangement with one or more pumps. The pumps may be configured or controlled to ensure a certain level in the volume or a certain exchange to and from the volume.

There may be tangential flow means for exchanging the medium between the fourth and a third volume. The tangential flow means may be one or more arrangements of pumps.

Preferably, at least one first or second volume may be configured to biologically filtering of the aqueous medium. The other first or second volume may be configured to degassing the aqueous medium.

Preferably, the at least one first or second volume is configured with means for nitrification of the aqueous medium.

Preferably, the annulus section comprises at least one volume for nitrification and another volume for de-nitrification.

Preferably, the first volume is configured to biologically filtering of the aqueous medium by a moving bed system. The second volume is configured to degassing the aqueous medium. The third volume is configured to biologically filtering the aqueous medium by a fixed bed system

Preferably, the one or more volumes may be configured as follows.

At least one first volume may be configured to for nitrification of the aqueous medium. At least one second volume may be configured for degassing the aqueous medium. At least one third volume may be configured for nitrification of the aqueous medium. At least one fourth volume is configured for de-nitrification of the aqueous medium.

This configuration may allow for de-nitrification. Whilst additional carbon provided for de-nitrification may degenerate the medium, if returned to a fish tank, and result in increased algae production, this particular configuration enables the aqueous medium to be returned to a volume configured for nitrification. The nitrification volume may be the first volume, the third volume or both. The additional carbon may then be consumed by bacteria in one of the nitrification volumes. The first, centre, volume may be a moving bed type and consume carbon at a relatively high level. The third, annulus, volume may be a fixed bed type and consume carbon at a relatively low level. A person skilled in the art will appreciate the option to balance the levels of carbon consumption. In particular a person skilled in the art will appreciate the option and the ease to install pumps to adjust the levels or the flows between volumes configured for de-nitrification and volumes configured for nitrification.

Preferably, the cleansing system may be configured so that the fourth volume is arranged adjacent to at least one third volume and wherein the least one third volume and the fourth volume are in communication via at least a third-fourth-overflow leveller arranged at third-fourth overflow leveller level and to tangentially overflow the aqueous medium from the fourth volume to the least one third volume.

Preferably, the first volume may be configured as a moving bed type of reactor; the second volume may be configured for degassing the aqueous medium. The second volume may be sandwiched between two third volumes each configured as a fixed bed type of reactor. The fourth volume may be between the two third volumes and configured for de-nitrification of the aqueous medium.

This configuration will allow one third volume to be cleaned or maintained whilst the other third volume is in operation or use; and vice versa. In example, the third volumes may be configured for nitrification. The configuration enables a "mirror-like" system and as seen and further disclosed in the detailed section, the suggested means allows for easy cleaning of the third volume.

Having only one degassing volume saves some piping. In an aspect, there may be pipes or outlets arranged at the two ends of degassing section, which outlets return the degassed aqueous medium to respective fish tanks.

A person skilled in the art may want to make use of the configurations suggested. In an aspect the first volume, the centre volume, may be configured for de-nitrification. The fourth volume may then be configured for nitrification.

An object is achieved by a method for cleansing an aqueous medium from an aquaculture system in a cleansing system, the method comprising the steps of independent claim 11.

An object is achieved by a recirculating aquaculture system, the system comprising a cleansing system as disclosed herein and comprising at the least one fish tank and arranged so that the water is recirculated between the at least one fish tank and the cleansing system, according to independent claim 14.

Preferably, each of the least one fish tanks has a fish tank outlet in communication with the cleansing system inlet and where the cleansing system inlet level is at a gravitational level that is lower than a fish tank outlet level of each of the least one fish tanks; and which cleansing system outlet is in communication with a flow-setter in each of the least one fish tanks; wherein there is a pump in the communication between the cleansing system and the least one fish tanks.

Disclosed here below is a method for cleansing an aqueous medium from an aquaculture system in a cleansing system. The method may comprise the following acts.

There may be an act of providing the aqueous medium to a cleansing system inlet in the cleansing system.

There may be a following act of mechanical filtering of the aqueous medium in a mechanical screen filter.

There may be a following act of biologically filtering the aqueous medium in a first reactor section

There may be a following act of parting the aqueous medium into a second reactor and a degassing section.

In the degassing section and the second reactor there may be acts performed in parallel.

There may be an act of degassing the aqueous medium in the degassing section. There may be an act overflowing of the aqueous medium from the second reactor into the degassing section.

From the degassing section there may be an act of outletting the now cleaned aqueous medium through a cleansing system outlet.

There may be an act of pumping the aqueous medium.

It is understood that a reactor or section is a chamber or volume in which the aqueous medium or water can be and in which a reaction or process can take place. Each reactor or section may be a chamber or volume. Thus, the first reactor may be a first volume in which a first reaction may be performed. The second reactor may be a second volume in which a second reaction may be performed. In a very special embodiment a volume or a reactor may be used simply as storage or a buffer without any further purpose.

It is understood that the aqueous medium from the fish tank is contaminated with at least carbon dioxide and nitrogenous products. The medium may also contain biological organic waste products, e.g. faeces, particulate matter, i.e. smaller or larger physical objects. In general, the aqueous medium may be waste water from an aquaculture system, a fish farming system including fish farming of salmon or the like.

It is achieved that the contaminated aqueous medium is cleaned and degassed and sufficiently prepared for recirculation. The contaminated aqueous medium may be contaminated from an aquaculture tank and may have to be returned or recirculated into the aquaculture tank. The process performs this in a particular effective way that saves process steps and thus, resources to provide or enable the process steps. In particular the process provides an integrated process that results in e.g. sufficient cleaning, including mechanical cleaning, and biological cleaning, say nitrification, as well as degassing.

The process is further advantageous since the process allows for, either as per design or during operation, to adjust the partition of the medium between the second reactor process and the degassing process.

In example the first reactor may perform nitrification and the overflow to the second reactor and degassing may be adjusted by changing the volume, either the diameter or the level of barriers between sections. The activity or recirculation in the moving bed character may also be adjusted. Thereby, the nitrification level may be controlled before overflowing the medium to the second reactor and the degassing section.

The first reactor or volume may be a moving bed type of reactor. The first reactor may be configured with aeriation means such as airlifts to generate mixing flows according to design or practice.

The first reactor may be configured to sustain bio-elements or -carriers in the medium in the first reactor by being configured with means sealing off such bio-element from the first reactor from the annulus ring or arc-sections. There may be perforated walls, grids or other barriers restraining the bio-elements whilst allowing the aqueous medium to flow.

The second reactor may be used to filter or clean a certain part of the medium before overflowing into degassing. The second reactor may involve further nitrification, removal or containment of finer particles. The filtering may be biological or mechanical. In an aspect use of bio-elements suspended in the medium will harvest particles and products by a growth process whereby the medium is cleaned or filtered.

The second reactor may be optional and the second reactor may also be a pass-through (buffer-type) of volume. Optionally, there may be a mechanical filter.

The second reactor or volume may be a fixed bed type of reactor. The second reactor or volume may be a moving bed type of reactor. Likewise, the second reactor or volume may be configured to sustain bio-carriers in the second reactor. There may be a perforated barrier such as top deck that allows the aqueous medium to flow through in an upward direction whilst restraining bio-carriers.

The degassing may involve injecting air into the medium. The medium may, from the overflow from the first and second reactors be broken into smaller drops, droplets by overflowing a perforated plate or through crown nozzles. There is an effective cascading of the medium (downward by gravitation) that meet with a counter flow or counter directed stream of say air or oxygen enriched (upward) stream.

There may be volume of the aqueous medium that is still and from which degassing (of CO2 and N2) takes place so that the degassing leaves the medium and is removed upwardly.

In one embodiment, the percentage of the aqueous medium during the act of parting into the second reactor and the degassing section may be adjusted either before or after the construction of cleansing system. A person skilled in the art would know the right percentages to obtain optimal condition.

Parting the aqueous medium may be performed in a substantially radially directed outward flow from the first reactor section into arc-sections of a surrounding annulus section. The arc-sections include at least the second reactor and the degassing section.

The second reactor receives part of the aqueous medium. The degassing section receives part of the aqueous medium. The second reactor and the degassing section may divide the aqueous medium.

The arc-sections in the annulus section may be adjusted to adjust the division or parting of the aqueous medium from the first section.

The act of overflowing of the aqueous medium may be performed in a substantially tangentially directed flow at arc-section dividers from the second reactor and the degassing section.

Thereby, the flow is controlled since the arc-section divider works or can be modified to adjust the flow and the nature of the flow into the degassing section.

Different types of perforations, holes, tubes, pipes may be applied. Furthermore, there may be valve or blinds that can adjust the flow, the level or close the flow.

The act of providing the aqueous medium to an inlet in the cleansing system may be performed at a gravitational level that is above the act of parting the aqueous medium into the second reactor and the degassing section.

Below the act of parting the act of overflowing of the aqueous medium from the second section into the degassing section is performed.

Below the act of overflowing there is the act of outletting the aqueous medium.

Thus, the aqueous medium cascades from a centre inlet and is distributed radially in the first reactor and cascades radially outward over levellers or edges into respective second reactor(s) and degassing section(s). The second reactor and the degassing section being configured with a leveller or edge in between so that the aqueous medium cascades from the second reactor to the degassing section. Finally, the aqueous medium is outlet from a lower most or bottom part of the degassing section.

Thereby the aqueous medium is effectively cleaned. That is mechanically and/or biologically. That includes cleaned for particulates (that is objects, biological matter or collections of biological matter). The cleaning includes to be degassed. The cleaning is achieved with reduced energy or pumping equipment than hereto. Furthermore, the arrangement results in optimisation of space and thus reduces the need of construction materials as well piping.

Disclosed here below is a cleansing system configured to receive aqueous medium from at least one fish tank and to return a cleaned aqueous medium to the at least on fish tank.

The cleansing system may comprise a cleansing system inlet centrally located in the cleansing system. The inlet is in communication with a mechanical filter configured to mechanical filtering of the aqueous medium. The inlet is arranged above and substantially surrounded by a first reactor section configured to biological filtration of the aqueous medium. The first reactor is substantially surrounded by an annulus section.

The annulus section is parted in arc-sections of at least a second reactor; and a degassing section configured to degassing the aqueous medium.

There is a cleansing system outlet configured to outletting the now cleaned aqueous medium from the annulus section. The cleansing system outlet is from the degassing section.

In one embodiment, there may be one or more mechanical filter(s). Thereby, the aqueous medium is filtered before entering the first reactor and larger particles are discarded. The mechanical filter may be a drum screen type of filter.

In one embodiment there may be one or more degassing systems.

An effect of the degassing system may be to decrease the amount of or remove CO₂. Thereby, the quality of the aqueous medium is maintained to secure optimal condition in the fish tank.

Another effect of the degassing system may be to decrease the amount of or remove Nitrogen from the aqueous medium. If atmospheric air is pumped into the system from below, the air may be saturated with Nitrogen. If the amount of Nitrogen is not decreased and the aqueous medium is later used in a fish tank it may cause decompression sickness systems for the fish.

In an embodiment, the cleansing system may have a flushing outlet. The effect of the flushing outlet is to remove part of or the whole aqueous medium from the cleansing system. This may be helpful to do as colonies of small particles may build up in the system.

Furthermore, the accumulation of organic materials and other wastes materials is kept to a minimum. Fouling is thus reduced.

Overall the method and system disclosed will lower the energy consumption otherwise needed. The cleansing system or method will only need or have to "lift" the water once to clean the water in four processes, where big particles are cleaned by a drum filter, nitrification is performed in the first section, such as a moving bed section, degassing (incl. CO2, N2) is performed in a degassing section, and small particles may be cleaned in a second section such as a fixed bed filtration. The water flows or cascades via gravitation between the four cleaning processes.

A further advantage of the system or method is that all sections or volumes will experience a continuous flow of water, which reduces or eliminates dead zones or stagnant water. Thereby further reducing or eliminating the need for piping to reduce creation or contamination with Sulphur.

Hence, the need for piping and space is reduced or eliminated. Also the need of pumps and space and energy for such pumps are reduced or eliminated.

Thus, all the cleaning of the water in "one-step" and water can be re-circulated to get an improved or optimal water quality for the fish breading.

Hence, water of the required purity and with acceptable concentrations (e.g. of CO2) can be recirculated thus allowing for aquaculture whilst reducing environmental impact.

A second reactor may be configured with an overflow leveller arranged at a gravitational level that is above the gravitational level in the degassing section for overflowing of the aqueous medium from the second reactor into the degassing section.

The annulus section may comprise a pair of second reactors and a pair of degassing sections; which pairs separate each other.

The parting may be performed into a pair of opposite second reactors and a pair of opposite degassing sections. The act of overflowing is performed at tangentially directed and oppositely directed flows at annulus dividers from the second reactors into the degassing sections.

The degassing section may comprise a cross-flow or counter-flow applicator arrangement of air arranged below crown nozzles for cascading the aqueous medium onto an upper part of the cross-flow or counter flow applicator arrangement. There may be air communicators arranged to guide air to a lower part of the cross-flow or counter flow applicator arrangement.

Thereby is provided as large a surface contact between air and the aqueous medium as possible. The cross-flow applicators may be arrangements of plates that are bent and having as large a surface as possible. The plates may be coated with anti-fouling coatings. The plates or arrangements may be suspended in the degassing section and air may be directed to the bottom of the plates or channels formed, whereas the medium drizzles or cascades down to the top of the plates or channels formed.

The aqueous medium may drizzle down and experiences a free fall of say 1 to 2 meters to form small droplets. Crown nozzles may be used to initiate the droplets or cascade process.

The second reactor may comprise a deck arranged to cover the second reactor and configured with deck perforations for an up-ward penetration of the aqueous medium.

The deck may withhold bio-carriers or particular matter. Furthermore, the deck perforation may be altered or distributed to generate or balance pressure differentials so as to provide an even water level in the tangential level, thereby ensuring the overall flow performance or characteristics.

In particular, there may be differential pressure at edge or at the leveller between the second reactor and the degassing section. The pressure differential may be countered by having larger perforations towards the leveller.

The first reactor section may comprise transverse plates substantially arranged in vertically and in parallel.

Thereby, enabling or providing a substantial vertical flow-pattern between the plates and thereby, a desired or complete suspension of bio-elements during operation. There may be aeration or an air lift in every other chamber, section or volume between two plates.

The annulus section may be formed by prefabricated plates/arc-sections, such as metal plates or glass-fibre plates and configured for receiving the first reactor section inserted substantially in the centre.

The foundation or base may be concrete or a plate. Using metal plates, glass-fibre plates or the like will greatly reduce the use of materials and the like. Using plates, such as pre-fabricated elements will also reduce maintenance costs and efforts and allow for adjustments.

The mentioned elements may also easily be modified to balance the overall flow characteristics of the system.

Disclosed here below is a recirculating aquaculture system (RAS), the system comprising a cleansing system and at least one fish tank, wherein the water is recirculated between the least one fish tank and the cleansing system.

In one embodiment, the RAS system may have one or more buffer tanks. One effect of a buffer tank may be to maintain suitable conditions for optimal function in both the cleansing system and the fish tank. The buffer tank may be a buffer to maintain temperature. The buffer tank is further advantageous during fish outtake since it allows to maintain the state of the aqueous medium.

In one embodiment, the fish tank may be intended for salmons or other sensitive species. To breed salmons, the water temperature should be stable around 14°C and the level of CO₂ should be lower than 15 mg/L. Therefore, it may be important to have an affective cleansing system, and a buffer tank.

In one embodiment, there may be a motor/a pump for recirculating the aqueous medium in the RAS system. The motor/pump may be placed after the cleaning system outlet. Thereby, the motor is located after the aqueous medium is cleansed. This may help to keep the maintenance at a minimum and the lifespan at a maximum.

In one embodiment, there may be walls between the fish tank and the cleansing system. Thereby, the fish are shielded of any possible noise from the cleansing system and the stress levels of the fish may be reduced.

Each of least one fish tanks may have a fish tank outlet in communication with the cleansing system inlet which cleansing system inlet is at a gravitational level that is lower than a fish tank outlet leveller of each of the least one fish tank. The cleansing system outlet is in communication with a flow-setter in each of the least one fish tanks. There is a pump in the communication between the cleansing system and the least one fish tanks.

The cleansing system may be as outlined in this disclosure.

The fish tank may have a fish tank wall that is cylindrical with the fish tank outlet coaxially arranged; and wherein the flow-setter is arranged and extends upwards at the fish tank wall and has flow-setter perforations in the upward direction.

In one embodiment, the fish tank may be cone-shaped towards the bottom of the tank.

The cleansing system may thus be driven by gravitation, since the inlet is at a highest level, below which the level of the overflow from the central first reactor into the annulus section is arranged. There may be a level from the first reactor into the second reactor. There may be the same level or another (lower) level from the first reactor into the degassing section. With the arc-sections there may be a level between the second reactor into the degassing section. The levels may be adjusted or configured to be adjusted so as they generate a flow through the cleansing system in accordance with the necessary levels of cleaning, including nitrification and degassing of CO2.

In combination with one or more fish tanks, the level of the input level in the cleansing tank may be arranged below the level of the output of the (dirty) aqueous water from the one or more fish tanks. Thereby, only one pump may drive the flow. The pump may be placed just after the output from the cleansing system thereby experiencing the cleanest possible medium. At the same time, the pump may provide the required pressure to one or more flow setters in one or more fish tanks.

### Description of the Drawing

Embodiments of the invention will be described in the figures, whereon:
- Fig. 1: illustrates a method of cleansing an aqueous medium;
- Fig. 2: illustrates a perspective view of a cleansing system;
- Fig. 3: illustrates a perspective view of a cleansing system and the interior of a second reactor and a degassing section;
- Fig. 4: illustrates a cross section view of a cleansing system, the cross section being through a first reactor and a second reactor;
- Fig. 5: illustrates a cross section view of a cleansing system, the cross section being through first reactor and a degassing section;
- Fig. 6: illustrates a side view of a RAS-system comprising a cleansing system and a fish tank;
- Fig. 7: illustrates a top view of multiple RAS-systems, where each RAS-system comprises a cleansing system in connection with two fish tanks;
- Fig. 8: illustrates a side view of a fish tank;
- Fig. 9: illustrates a top view of a fish tank with a central fish tank outlet;
- Fig. 10: illustrates a perspective and a side view of a flow-setter with perforations;
- Fig. 11: illustrates a recirculation aquaculture system (RAS)
- Fig. 12: illustrates a recirculation aquaculture system (RAS) comprising a cleansing system and a fish tank;
- Fig. 13: illustrates a cleansing system for a cascading flow through three volumes;
- Fig. 14: illustrates a cleansing system with a fourth volume; and
- Fig. 15: exemplifies the aspects illustrated in fig. 14.

### Item list

| | |
|---|---|
| 1 | Aquaculture system |
| 3 | Aquaculture system wall |
| 5 | Aqueous medium |
| 10 | Cleansing system |
| 12 | Centre |
| 15 | Cleansing system inlet |
| 16 | Cleansing system outlet |
| 17 | Cleansing system inlet level |
| 18 | Flushing outlet |
| 20 | Annulus section |
| 25 | Arc-section divider |
| 30 | Arc-sections |
| 40 | Volume |
| 41 | First Volume |
| 42 | Second Volume |
| 43 | Third Volume |
| 44 | first-second-overflow leveller |
| 45 | first-second-overflow leveller level |
| | |
| 46 | first-third-overflow leveller |
| 47 | first-third-overflow leveller level |
| 48 | second-third-overflow leveller |
| 49 | second-third-overflow leveller level |
| 50 | First reactor |
| 60 | Transverse plate |
| 70 | Mechanical filter |
| 100 | Second reactor |
| 102 | Pair of second reactors |
| 105 | Degassing inlet |
| 110 | Second reactor inlet pipe |
| 120 | Deck |
| 122 | Deck perforation |
| 130 | Overflow leveller |
| 140 | Further volume |
| 141 | Return flow means |
| 142 | Return flow |
| 144 | Fourth volume |
| 145 | First-Fourth-overflow leveller |
| 146 | First-Fourth-overflow leveller level |
| 147 | Third-Fourth-overflow leveller |
| 148 | Third-Fourth-overflow leveller level |
| 149 | Permeable retainer |
| 150 | Degassing section |
| 152 | Pair of degassing sections |
| 160 | Degassing section deck |
| 170 | Crown nozzles |
| 180 | Counter-flow applicator arrangement |
| 190 | Air communicator |
| 191 | Air communicator inlet |
| 192 | Air communicator outlet |
| 200 | De-nitrification system |
| 210 | Cover |
| 220 | Air lift |
| 400 | Buffer tank |
| 500 | Fish tank |
| 510 | Fish tank inlet |
| 520 | Fish tank outlet |
| 525 | Fish tank outlet leveller |
| 526 | Fish tank outlet leveller level |
| 530 | Fish tank wall |
| 600 | Flow-setter |
| 610 | Flow-setter perforation |
| 620 | Flow-setter inlet |
| 630 | Mounting |
| 650 | Upward direction |
| 700 | Pump |
| 1000 | Method |
| 1050 | Providing |
| 1100 | Mechanical filtering |
| 1150 | Biological filtering |
| 1200 | Parting |
| 1300 | Overflowing |
| 1320 | Radially directed outward flow |
| 1330 | Tangentially directed flow |
| 1350 | Degassing |
| 1400 | Outletting |

### Detailed Description of the Invention

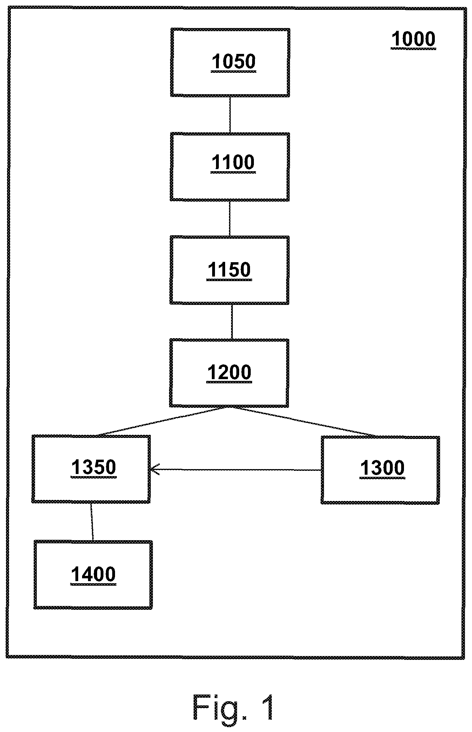

Figure 1 illustrates a method 1000 for cleansing an aqueous medium (not shown) from an aquaculture system (not shown) in a cleansing system (not shown).

The method 1000 comprises the acts of providing 1050 the aqueous medium to a cleansing system. Next followed by an act of mechanical filtering 1100 of the aqueous medium.

Afterwards followed by an act of biologically filtering 1150 of the aqueous medium.

Next followed by an act of parting 1200 the aqueous medium into a second reactor (not shown) and a degassing section (not shown). In the second reactor there is an act of overflowing 1300 of the aqueous medium from the second reactor into the degassing section. In the degassing section there is an act of degassing 1350 the aqueous medium.

In the degassing section there is an act of outletting 1400 the now cleaned aqueous medium through an cleansing system outlet (not shown).

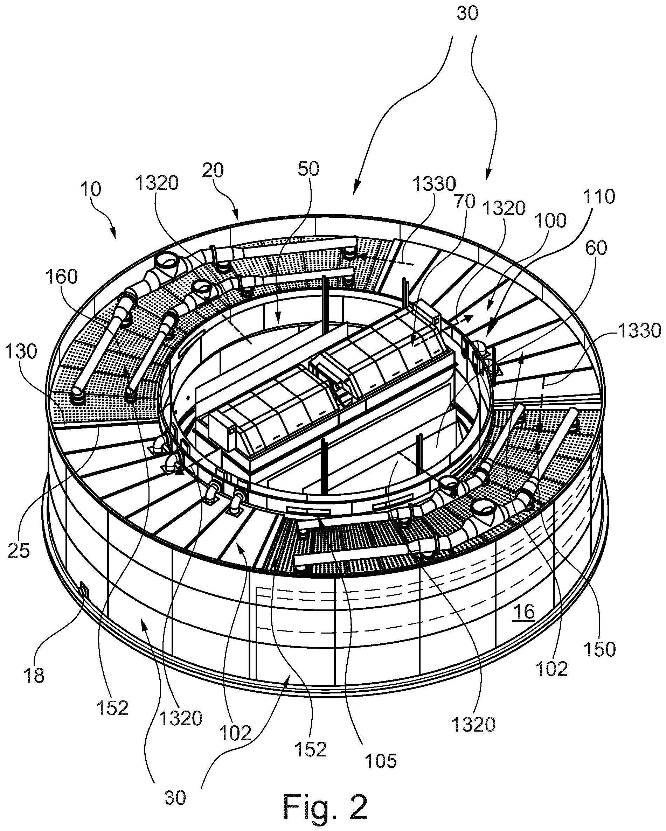

Figure 2 illustrates a perspective view of the cleansing system 10.

The cleansing system 10 has a mechanical filter 70 intended for mechanically filtering 1100 the aqueous medium 5 (not shown).

The mechanical filter 70 is surrounded by a first reactor section 50.

The first reactor section 50 (or volume/chamber) is intended for biological filtration 1150 of the aqueous medium 5.

The first reactor has transverse plates 60 arranged vertically and in parallel.

The first reactor section 50 is surrounded by an annulus section 20. The annulus section 20 comprises two arc-sections 30.

The parting 1200 of the aqueous medium 5 is performed in a substantially radially directed 1320 outward flow from the first reactor section 50 into arc-sections 30.

The flow from the first reactor section 50 into the arc-sections 30 is enabled (or adjusted) by levels of or perforations in a wall between the first reactor section 50 and the arc-sections 30.

The levels of or perforations/holes may form the degassing inlet 105 as illustrated. In this embodiment there is a second reactor inlet pipe 110 connecting the first reactor 50 with the second reactor 100. There are valves on each inlet pipe 110 to adjust the level and flow.

Each arc-sections 30 include a second reactor 100 (or volume/chamber) and a degassing section 150 (volume/chamber). Thereby, the annulus section 20 comprises a pair 102 of second reactors 100 and a pair 152 of degassing sections 150.

The arc-sections 30 are divided by arc-section dividers 25.

There is an overflowing 1300 of the aqueous medium 5. The overflowing 1300 is performed in a substantially tangentially directed 1330 flow at arc-section dividers 25 from the second reactor 100 and into the degassing section 150.

The second reactor 100 has an overflow leveller 130 arranged at a gravitational level that is above the gravitational level in the degassing section 150. The overflow leveller is intended for overflowing 1300 of the aqueous medium 5 from the second reactor 100 into the degassing section 150.

The second reactor 100 has a flushing outlet 18 intended for emptying the cleansing system 10 for the aqueous medium 5 during maintenance and cleaning.

The degassing section 150 has a cleansing system outlet 16 intended for providing cleansed aqueous medium 5 to a fish tank 500 (not shown).

The degassing section 150 has a degassing section deck 160. The degassing section top deck 160 is perforated.

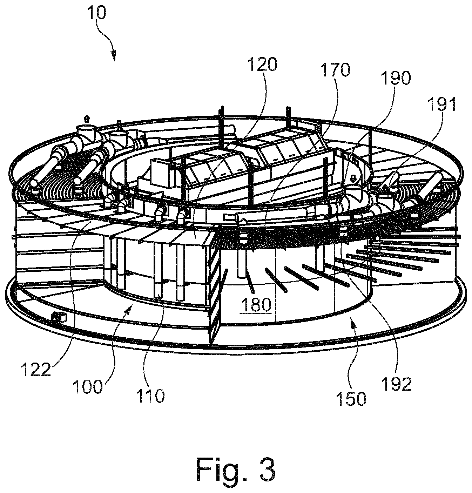

Figure 3 illustrates a perspective view of a cleansing system 10 and the interior of a second reactor 100 and a degassing section 150.

The second reactor 100 is an up-flow second reactor. The aqueous medium 5 (not shown) enter the second reactor 100 through four second reactor inlet pipe 110 near the lower part of the second reactor 100.

The second reactor comprises a deck 120. The deck 120 is located near the top of the second reactor 100 and covers the second reactor 100. The second reactor deck has deck perforations 122.

The degassing section has crown nozzles 170 and a counter-flow applicator arrangement 180 arranged below crown nozzles 170. The crown nozzles are intended for cascading the aqueous medium 5 onto an upper part of the counter flow applicator arrangement 180.

The degassing section 150 has an air communicator 190 intended for guiding air to the lower part of counter-flow applicator arrangement 180.

The air communicator 190 has an air communicator outlet 192 and an air communicator inlet 191.

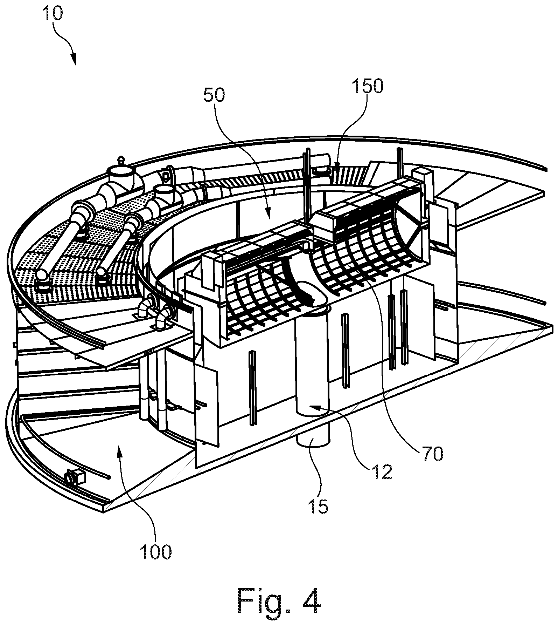

Figure 4 illustrates a cross section view of a cleansing system 10, the cross section being through a first reactor 50 and a second reactor 100.

The cleaning system 10 has two cleansing system inlets 15 located at the centre 12 of the cleansing system.

The cleansing system 10 has a mechanical filter 70. The mechanical filter is a drum filter.

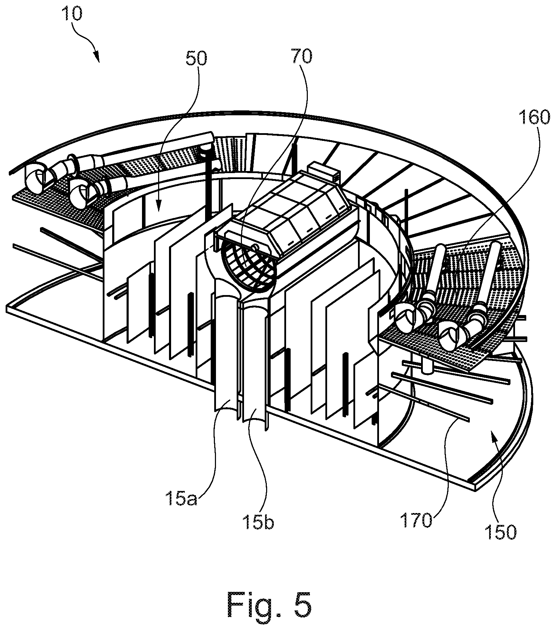

Figure 5 illustrates a cross section view of a cleansing system 10, the cross section being through first reactor 50 and a degassing section 150.

The cleaning system 10 has two cleansing system inlets 15a,b and is capable of receiving an aqueous medium 5 (not shown) from two fish tanks 500 (not shown).

The degassing section 150 has a degassing section deck 160. The degassing section top deck 160 is perforated.

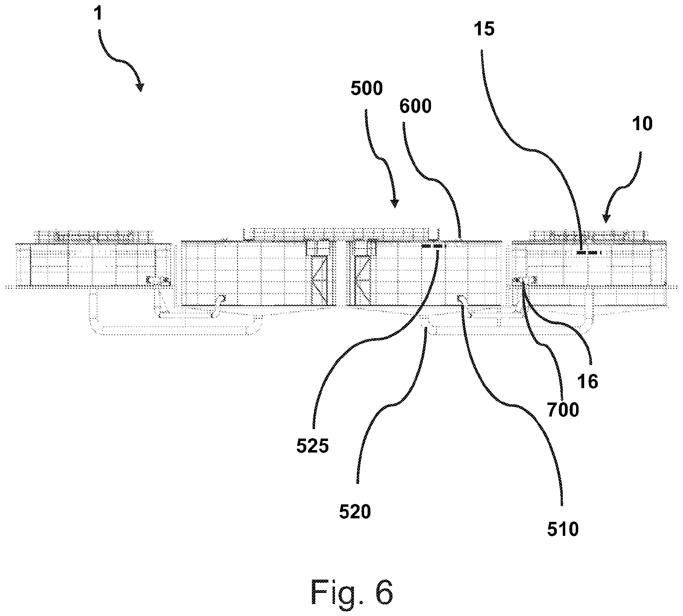

Figure 6 illustrates a side view of a recirculating aquaculture system 1 comprising a cleansing system 10 and a fish tank 500.

The cleansing system 10 has a cleansing system inlet 15 for receiving water from a fish tank 500 and a cleansing system outlet 16 for providing the cleansed aqueous medium to the fish tank 500.

The cleansing system outlet 16 has a pump 700 intended for pumping the cleansed aqueous medium 5 to the fish tank 500.

The fish tank 500 has a fish tank inlet 510. The lower part of the fish tank 500 is cone-shaped and a fish tank outlet 520 located at the centre of the fish tank 500.

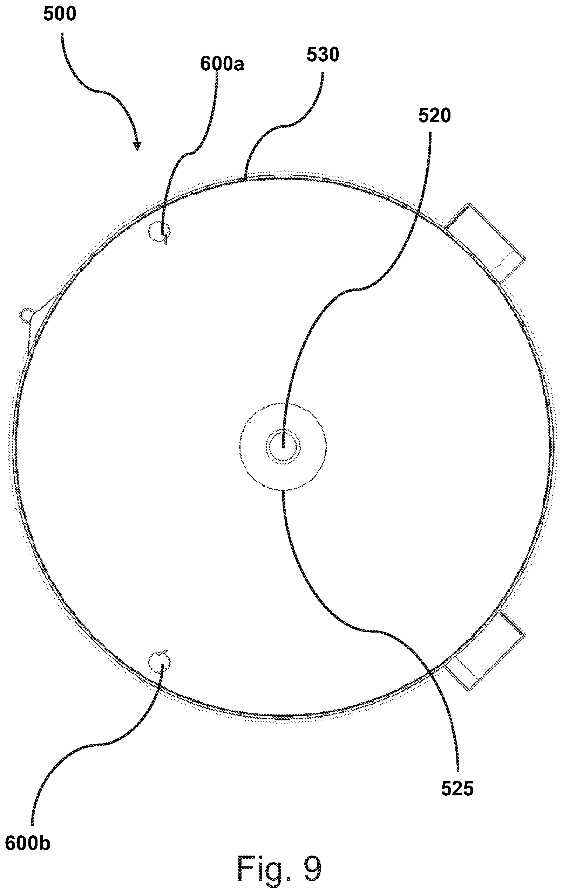

The fish tank 500 has a fish tank outlet 520 in communication with the cleansing system inlet 15 which cleansing system inlet 15 is at a gravitational level that is lower than a fish tank outlet leveller 525 (see figure 9) of the fish tank 500. The cleansing system outlet 16 is in communication with a flow-setter 600 in the fish tank 500. There is a pump 700 in the communication between the cleansing system 10 and the fish tank 500.

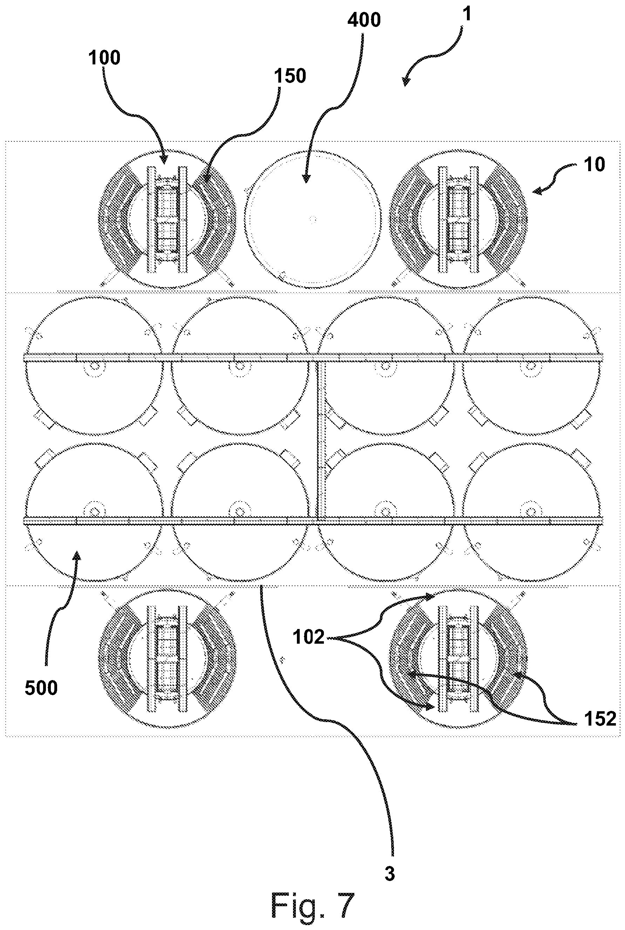

Figure 7 illustrates a top view of multiple RAS-systems 1, where each RAS-system 1 comprise a cleansing system 10 in connection with two fish tanks 500.

The cleansing system 10 comprises a pair 102 of second reactors 100 and a pair 152 of degassing sections 150.

The RAS-system 1 has a buffer tank 400.

Aquaculture system wall 3 shields the fish tanks 500 from the cleansing system 10.

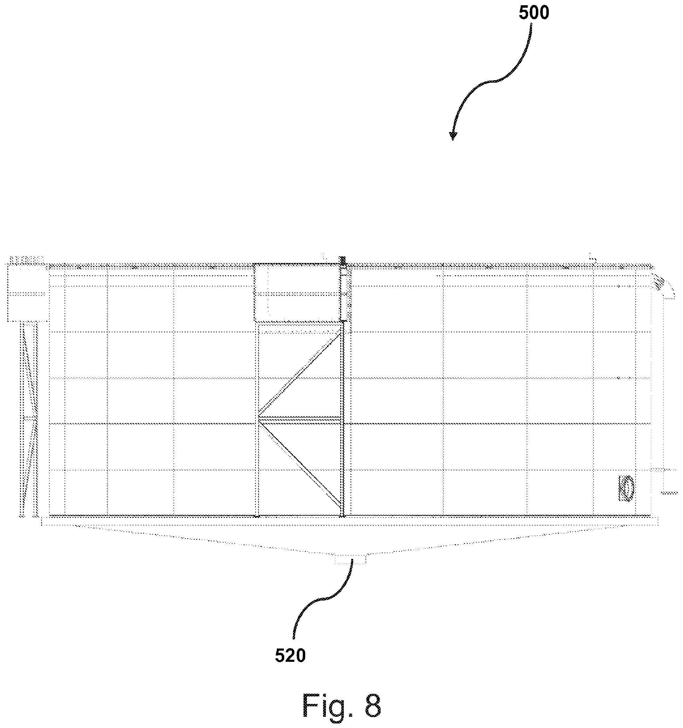

Figure 8 illustrates a side view of a fish tank 500.

The fish tank 500 is cone-shaped towards the bottom end and has a central fish tank outlet 520.

Figure 9 illustrates a top view of a fish tank 500 with a fish tank wall 530.

The fish tank 500 has a central fish tank outlet 520 surrounded by a fish tank outlet leveller 525.

The fish tank 500 has two flow-setters 600a,b located inside the tank 500 and near the wall 530. The flow-setters 600a,b are arranged and extend upwards at the fish tank wall 530.

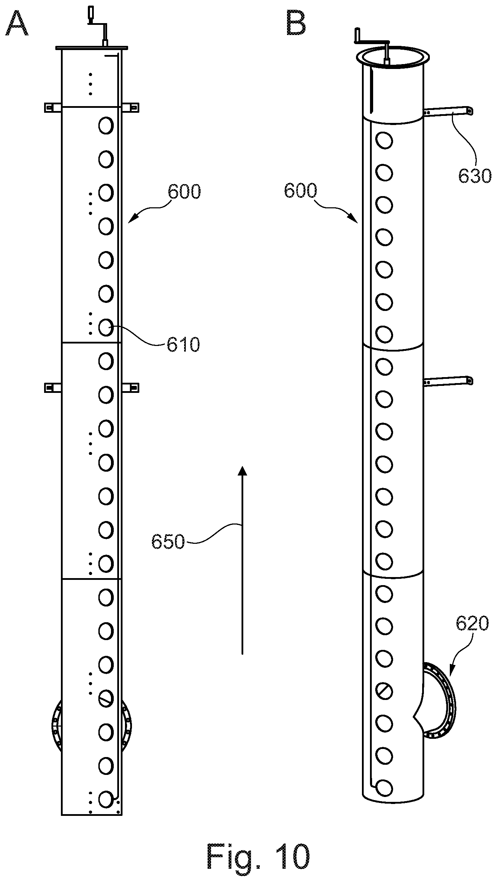

Figure 10A illustrates a side view of a flow-setter 600 and figure 10B illustrates a perspective view of a flow-setter 600.

The flow-setter has flow-setter perforations 610 to provide the cleansed aqueous medium 5 (not shown) to the fish tank 500 (not shown). The flow-setter perforations 610 extend in the upward direction 650. The flow-setter perforations are intended for outletting the aqueous medium 5 to the fish tank 500.

The flow-setter has a flow-setter inlet 620 to receive the aqueous medium 5 from the cleansing system 10 (not shown). The flow-setter inlet 620 is located at the lower part of the flow-setter 600.

The flow-setter has mountings 630 for mounting the flow-setters in the fish tank 500.

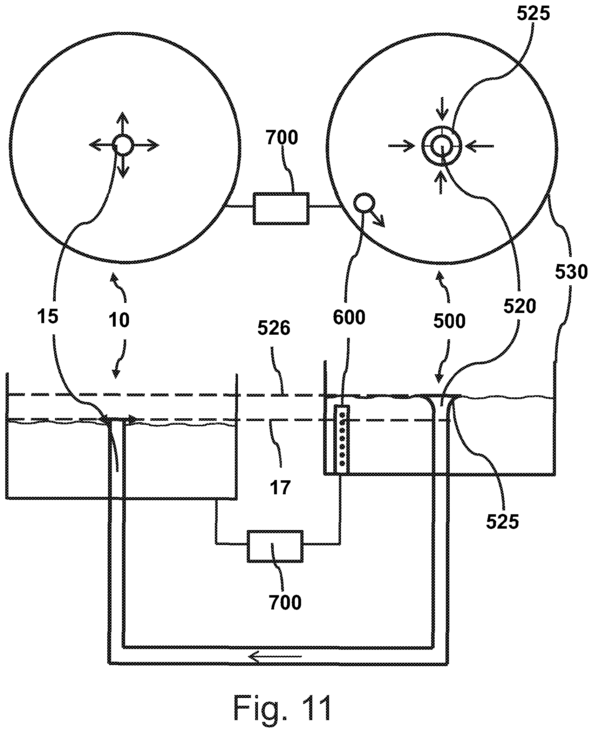

Figure 11 illustrates a recirculating aquaculture system 1, the system comprising a cleansing system 10 a fish tank 500. The water is recirculated between the fish tank 500 and the cleansing system 10.

From the fish tank 500 water overflows into the fish tank outlet 520 at fish tank outlet leveller level 526 determined by a fish tank outlet leveller 525 and flows via a piping system to a cleansing system inlet 15 at a cleansing system inlet level 17 into the cleansing system 10. From the cleansing system 10 there is a cleansing system outlet and by a pump 700 the water is elevated back into the fish tank 500 and a flow is established by a flow-setter 600.

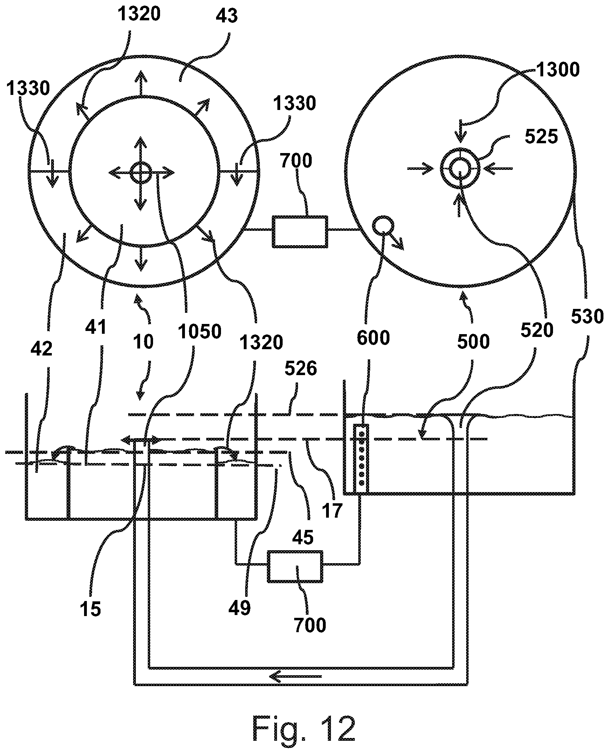

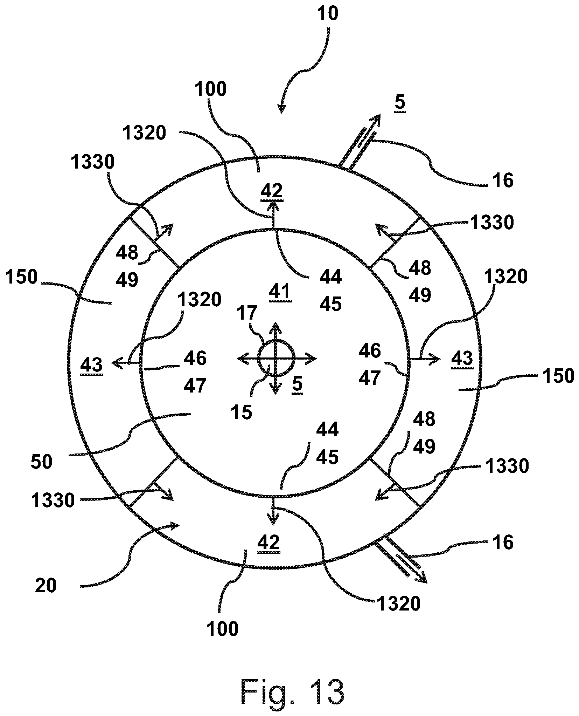

The cleansing system 10 may be configured as disclosed in the figure, configured as disclosed in the previous figures or as in figures 12 and 13.

Figure 12 illustrates, in continuation of figure 11, a cleansing system 10 and a fish tank 500 interconnected as a RAS-system. The cleansing system 10 is arranged with a first volume 41 surrounded by an annulus section 20 with a first arc forming a second volume 42 and a second arc forming third volume 43. From the first volume 41 there is radial flow 1320 parting the medium into the second volume 42 and into the third volume 43. There is a tangential directed flow 1330 from the second volume 42 to the third volume 43. The cleansing system 10 is configured with leveller arrangements so that ordered gravitationally from a highest level, the order is fish tank outlet leveller level 526, cleansing system inlet level 17, first-second-overflow leveller level 45, and lowest second-third-overflow leveller level 49. The first-third overflow leveller level 47 is not shown, but it may be at the first-second overflow leveller level 45 or between that and the second-third overflow leveller level 49.

Figure 13 illustrates a cleansing system 10 configured to receive aqueous medium 5 from at least one fish tank 500 (not shown) and to return a cleaned aqueous medium (5) to the at least one fish tank 500.

The cleansing system 10 comprises a cleansing system inlet 15 arranged at a cleansing system inlet level 17 to inlet the aqueous medium 5 into a first volume 41. The first volume 41 is substantially surrounded by an annulus section 20 having at second volume 42. The first volume 41 and the second volume 42 are in communication via at least a first-second-overflow leveller 44 arranged at first-second overflow leveller level 45 and to radially overflow the aqueous medium 5 from the first volume 41 to the second volume 42.

In this embodiment, there is a radially directed outward flow 1320 from the first volume 41 to respective second volume 42 and third volume 43. The radially directed outward flow 1320 is from the first volume 41 to the second volume 42 via a first-second overflow leveller 44 arranged with a first-second overflow leveller level 45. The leveller is at the wall here formed as the inner circle of the annulus section 20. The leveller may be a barrier or valve which may be adjustable to adjust the first-second overflow leveller level 45. Similarly, the radially directed outward flow 1320 is from the first volume 41 to the third volume 43 via first-third overflow leveller 46 arranged with a first-third overflow leveller level 47.

There is also a tangentially directed flow 1330 from the third volume 43 to the second volume 42 via a second-third overflow leveller 48 at a second-third overflow leveller level 49.

There is a cleansing system outlet 16 arranged in the annulus section 20 configured to outletting the now cleaned aqueous medium 5 from the annulus section 20. In this embodiment, the cleansing system outlet 16 is from the second volume 42.

With reference to figures 2 to 5, the first volume 41 may be configured as a first reactor 50. The second volume 42 may be configured as a degassing section 150. The third volume 43 may be configured as a second reactor 100.

The first-second overflow leveller 44 may be configured as the degassing inlet 105 between the first reactor 50 and the degassing section 150 as seen in figures 2 and 3. The first-third overflow leveller 46 may be configured as one or more of the reactor inlet pipe(s) 110, see figure 3, between the first reactor 50 the second reactor 100. The second-third overflow leveller 48 may be configured as the overflow leveller 130 between the second reactor 100 and the degassing section 150 e.g. in figure 3.

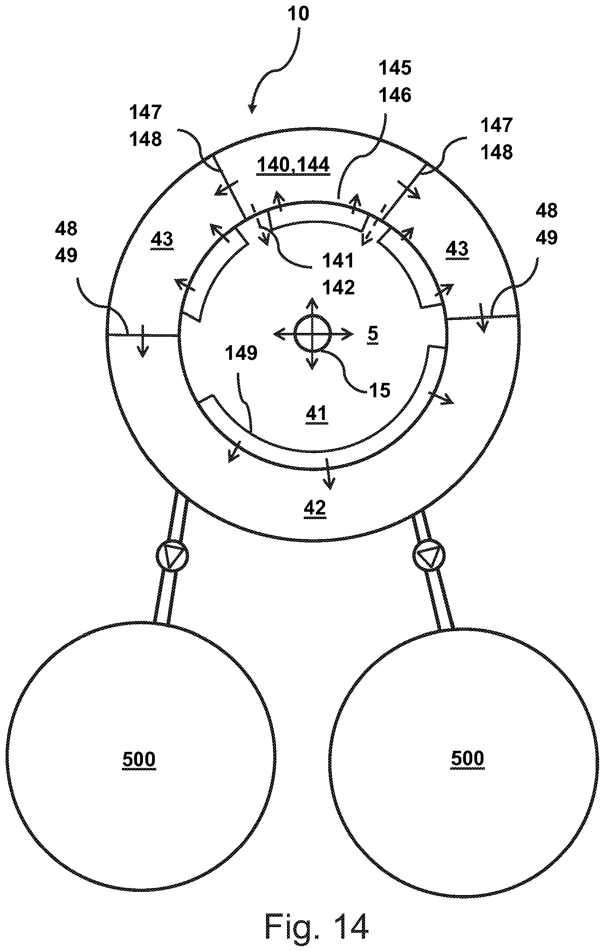

Figure 14 discloses an additional configuration and features of a cleansing system 10. For illustrative purposes the cleansing system 10 is shown in connection with two fish tanks 500 each supplied by pumps 700. The return system is not shown.

Figure 14 uses elements readily available from figures 11 to 13 such as the levellers 48 and level 49. Other overflows levellers and flows are understood in view of previous figures and the arrows show the intended or implied resulting flow directions.

A first volume 41 is enclosed or surrounded by an annulus section 20 comprising a second volume 42, and here two third volumes 43.

The cleansing system 10 has an annulus section 20 that is parted in arc-sections 30 forming at least a further volume 140. The further volume 140 is a fourth volume 144 that is in the annulus section 20. The first volume 41 and the fourth volume 144 are in communication via at least a first-fourth-overflow leveller 145 arranged at a first-third overflow leveller level 146 to radially overflow the aqueous medium 5 from the first volume 41 to the fourth volume 43.

Optionally there may be return flow means 141 for returning the aqueous medium 5 from a volume in the annulus section 20 to the first volume 41 in a return flow 142. The return flow 142 is here shown from the fourth volume 144 back into the first volume 41. The return flow means 141 may be perforations in the wall section between the annulus section 20 and the first volume 41. Alternatively, the return flow means 141 may be a pump arrangement.

The third volume 43 and the fourth volume 144 are in communication via at least a third-fourth-overflow leveller 147 arranged at third-fourth overflow leveller level 148 and to tangentially overflow the aqueous medium 5 from the fourth volume 144 to the third volume 43.

Optionally there may be return flow means 141 for returning the aqueous medium 5 from the fourth volume 144 to the first volume 41 as a return flow 142.

The volumes disclosed in figure 14 may be configured as follows. The first volume 41 is configured to for nitrification of the aqueous medium 5. The second volume 42 is configured for degassing the aqueous medium 5. The third volume 43 is configured for nitrification of the aqueous medium 5. The fourth volume 144 is configured for de-nitrification of the aqueous medium 5.

In this particular embodiment, the cleansing system 10 may be considered as being configured as follows. The first volume 41 is configured as a moving bed type of reactor.

The second volume 42 is configured for degassing the aqueous medium 5. The second volume 42 is sandwiched between two third volumes 43. Each third volumes 43 are configured as a fixed bed type of reactor. The fourth volume 144 is between the two third volumes 43 and configured for de-nitrification of the aqueous medium 5.

In this embodiment, the flow from the first volume 41 to volumes (second 42, third 43 or fourth volumes 144) is through a permeable retainer 149 that is configured to allow the aqueous medium 5 to flow into volumes in the annulus section 20 whilst retaining say bio-cleaning elements in the first volume 41. In this embodiment, the first volume 41 is separated with other volumes by individual permeable retainers 149. A permeable retainer may be a screen with perforations or holes impermeable to bio-cleaning elements.

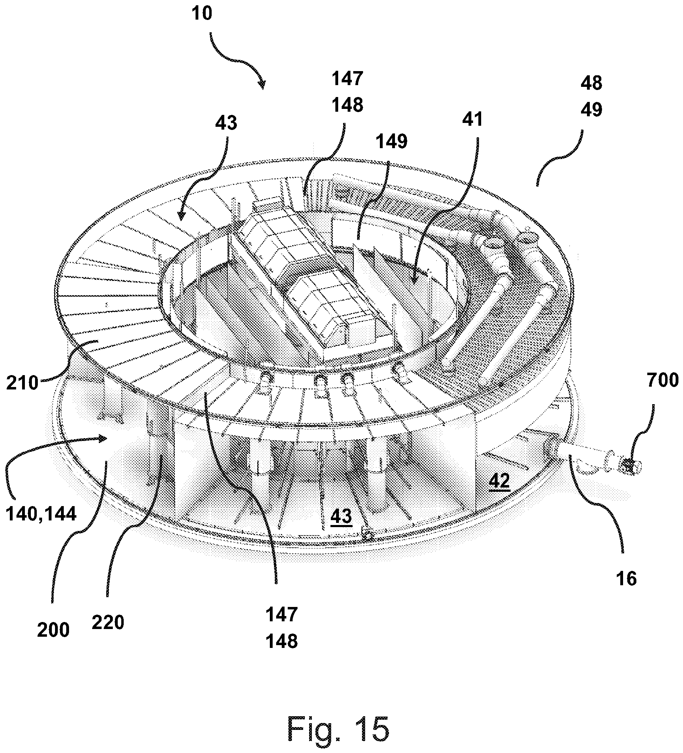

Figure 15 exemplifies the embodiment illustrated in figure 14 and the reference numbers are readily recognisable from figure 14.

A person skilled in the art will readily be able to install one or more pumping systems to provide the aqueous medium to the chamber or to move the aqueous medium from the chamber.

In this example, the additional chamber 140 i.e. the fourth volume 144 is configured for de-nitrification 200. There is a cover 210 or lid. There is an air lift 220 arrangement seen in the volume.

Also shown are details of the third volume 43, which here is arranged as a fixed bed type of chamber for nitrification. The third volume 43 has air lifts arranged.

The generic configuration disclosed in figures 11 to 14 may be implemented in special configurations derived from figure 1 to 11.

A person skilled in the art will appreciate that further embodiments may be envisaged within the scope of the invention defined by the appended claims.

## Claims

1. A cleansing system (10) configured to receive aqueous medium (5) from at least one fish tank (500) and to return a cleaned aqueous medium (5) to the at least one fish tank (500); the cleansing system (10) comprising:
- a cleansing system inlet (15) arranged at a cleansing system inlet level (17) to inlet the aqueous medium (5) into a first volume (41) that is substantially surrounded by:
- an annulus section (20) having a second volume (42), and where the first volume (41) and the second volume (42) are in communication via at least a first-second-overflow leveller (44) arranged at a first-second overflow leveller level (45) and to radially overflow the aqueous medium (5) from the first volume (41) to the second volume (42); wherein the annulus section (20) is parted in arc-sections (30) forming at least a further third volume (43) in the annulus section (20), where the first volume (41) and the third volume (43) are in communication via at least a first-third-overflow leveller (46) arranged at a first-third overflow leveller level (47) and to radially overflow the aqueous medium (5) from the first volume (41) to the third volume (43); and the second volume (42) and the third volume (43) are in communication via at least a second-third-overflow leveller (48) arranged at a second-third overflow leveller level (49) and to tangentially overflow the aqueous medium (5) from the third volume (43) to the second volume (42); and
- a cleansing system outlet (16) arranged in the annulus section (20) configured to outletting (1400) the now cleaned aqueous medium (5) from the annulus section (20).

2. The cleansing system (10) according to claim 1, wherein the cleansing system inlet level (17) is above the first-second overflow leveller level (45), which again is above the second-third overflow leveller level (49).

3. The cleansing system (10) according to claim 1 or 2, wherein the annulus section (20) is parted in arc-sections (30) forming at least a further fourth volume (144) in the annulus section (20), where first volume (41) and the fourth volume (144) are in communication via at least a first-fourth-overflow leveller (145) arranged at a first-fourth overflow leveller level (146) and to radially overflow the aqueous medium (5) from the first volume (41) to the fourth volume (43).

4. The cleansing system (10) according to claim 3,
wherein the third volume (43) and the fourth volume (144) are in communication via at least a third-fourth-overflow leveller (147) arranged at third-fourth overflow leveller level (148) and to tangentially overflow the aqueous medium (5) from the fourth volume (144) to the third volume (43).

5. The cleansing system (10) according to any one or more of the preceding claims , wherein at least one first or second volume (41, 42) is configured to biological filtering (1150) of the aqueous medium (5); and wherein the other first or second volume (41,42) is configured to degassing the aqueous medium (5).

6. The cleaning system (10) according to any one or more of the preceding claims, wherein the at least one first or second volume (41,42) is configured with means for nitrification of the aqueous medium (5).

7. The cleaning system (10) according to any one or more of the preceding claims, wherein the annulus section (20) comprises at least one volume for nitrification and another volume for de-nitrification.

8. The cleansing system (10) according to any one or more of claims 1 to 4, wherein the first volume (41) is configured to biological filtering (1150) of the aqueous medium by a moving bed system;
wherein the second volume (42) is configured to degassing (1350) the aqueous medium (5); and
wherein the third volume (43) is configured to biological filtering (1150) of the aqueous medium (5) by a fixed bed system.

9. The cleansing system (10) according to claim 3 or 4, wherein
- at least one first volume (41) is configured for nitrification of the aqueous medium (5);
- at least one second volume (42) is configured for degassing the aqueous medium (5);
- at least one third volume (43) is configured for nitrification of the aqueous medium (5);
- at least one fourth volume (144) is configured for de-nitrification of the aqueous medium (5).

10. The cleansing system (10) according to claim 3, wherein the first volume (41) is configured as a moving bed type of reactor; the second volume (42) is configured for degassing the aqueous medium (5), wherein the second volume (42) is sandwiched between two third volumes (43) each configured as a fixed bed type of reactor; and wherein the fourth volume (144) is between the two third volumes (43) and configured for de-nitrification of the aqueous medium (5).

11. A method (1000) for cleansing an aqueous medium (5) from an aquaculture system (1) in a cleansing system (10) according to one or more of claims 1-10, the method (1000) comprising acts of
- providing (1050) the aqueous medium (5) to a cleansing system inlet (15) and into a first volume (41) that is substantially surrounded by an annulus section (20) having a second volume (42);
- overflowing (1300) and parting (1200) the aqueous medium (5) radially from the first volume (41) to the second volume (42) and a third volume (43);
- and tangentially overflowing the aqueous medium (5) from the third volume (43) to the second volume (42);
- outletting (1400) the now cleaned aqueous medium (5) from the second volume (42) through a cleansing system outlet (16).

12. The method (1000) according to claim 11, wherein the act of providing 1050) the aqueous medium (5) at the inlet level (17) is performed at a level above the first-second overflow leveller level (45), and wherein the act of tangentially overflowing the aqueous medium (5) is performed at level above the second-third overflow leveller level (49).

13. The method (1000) according to claim 11 or 12, wherein acts of nitrification and de-nitrification are performed in the annulus section (20).

14. A recirculating aquaculture system (1), the system (1) comprising
- a cleansing system (10) according to any one or more of claims 1 to 10;
- at least one fish tank (500)
and wherein the water is recirculated between the at least one fish tank (500) and the cleansing system (10).

15. The recirculating aquaculture system (1) according to claim 14, wherein each of the least one fish tanks (500) has a fish tank outlet (520) in communication with the cleansing system inlet (15) and where the cleansing system inlet level is at a gravitational level that is lower than a fish tank outlet level (525) of each of the least one fish tanks (500); and which cleansing system outlet (16) is in communication with a flow-setter (600) in each of the least one fish tanks (500); wherein there is a pump (700) in the communication between the cleansing system (10) and the least one fish tanks (500).

## Patentansprüche

1. Reinigungssystem (10), das so konfiguriert ist, dass es ein wässriges Medium (5) von mindestens einem Fischtank (500) empfängt und ein gereinigtes wässriges Medium (5) zu dem mindestens einen Fischtank (500) zurückführt; das Reinigungssystem (10) umfassend:
- einen Reinigungssystemeinlass (15), der auf einer Reinigungssystemeinlassstufe (17) angeordnet ist, um das wässrige Medium (5) in ein erstes Volumen (41) einzulassen, das im Wesentlichen umgeben ist von:
- einen Ringabschnitt (20), der ein zweites Volumen (42) aufweist, und wobei das erste Volumen (41) und das zweite Volumen (42) über mindestens einen ersten zweiten Überlaufpegel (44) kommunizieren, der auf einer ersten zweiten Überlaufpegelstufe (45) angeordnet ist, und um das wässrige Medium (5) vom ersten Volumen (41) zum zweiten Volumen (42) radial zu überlaufen; wobei der Ringabschnitt (20) in Bogenabschnitte (30) unterteilt ist, die wenigstens ein weiteres drittes Volumen (43) in dem Ringabschnitt (20) bilden, wobei das erste Volumen (41) und das dritte Volumen (43) über wenigstens einen ersten dritten Überlaufpegel (46) kommunizieren, der auf einer ersten dritten Überlaufpegelstufe (47) angeordnet ist, und das wässrige Medium (5) von dem ersten Volumen (41) zu dem dritten Volumen (43) radial überströmen; und das zweite Volumen (42) und das dritte Volumen (43) über mindestens einen zweiten dritten Überlaufpegel (48) kommunizieren, der auf einer zweiten dritten Überlaufpegelstufe (49) angeordnet ist und das wässrige Medium (5) tangential vom dritten Volumen (43) zum zweiten Volumen (42) überlaufen lässt; und
- einem im Ringabschnitt (20) angeordneten Reinigungssystemauslass (16), der so konfiguriert ist, dass er das nun gereinigte wässrige Medium (5) aus dem Ringabschnitt (20) ableitet (1400).

2. Reinigungssystem (10) nach Anspruch 1, wobei der Reinigungssystemeinlasspegel (17) oberhalb der ersten zweiten Überlaufpegelstufe (45) liegt, die wiederum oberhalb der zweiten dritten Überlaufpegelstufe (49) liegt.

3. Reinigungssystem (10) nach Anspruch 1 oder 2, wobei der Ringabschnitt (20) in Bogenabschnitte (30) unterteilt ist, die mindestens ein weiteres viertes Volumen (144) im Ringabschnitt (20) formen, wobei das erste Volumen (41) und das vierte Volumen (144) über mindestens einen ersten vierten Überlaufpegel (145) kommunizieren, der auf einer ersten vierten Überlaufpegelstufe (146) angeordnet ist, um das wässrige Medium (5) vom ersten Volumen (41) zum vierten Volumen (43) radial zu überlaufen.

4. Reinigungssystem (10) nach Anspruch 3,
wobei das dritte Volumen (43) und das vierte Volumen (144) über mindestens einen dritten vierten Überlaufpegel (147) kommunizieren, der auf der dritten vierten Überlaufpegelstufe (148) angeordnet ist, um das wässrige Medium (5) vom vierten Volumen (144) zum dritten Volumen (43) tangential zu überlaufen.

5. Reinigungssystem (10) nach einem oder mehreren der vorstehenden Ansprüche, wobei mindestens ein erstes oder zweites Volumen (41, 42) zum biologischen Filtern (1150) des wässrigen Mediums (5) konfiguriert ist; und wobei das andere erste oder zweite Volumen (41,42) zum Entgasen des wässrigen Mediums (5) konfiguriert ist.

6. Reinigungssystem (10) nach einem oder mehreren der vorstehenden Ansprüche, wobei das mindestens eine erste oder zweite Volumen (41,42) mit Mitteln zur Nitrifikation des wässrigen Mediums (5) konfiguriert ist.

7. Reinigungssystem (10) nach einem oder mehreren der vorstehenden Ansprüche, wobei der Ringabschnitt (20) mindestens ein Volumen zur Nitrifikation und ein weiteres Volumen zur De-Nitrifikation umfasst.

8. Reinigungssystem (10) nach einem oder mehreren der Ansprüche 1 bis 4, wobei das erste Volumen (41) zum biologischen Filtern (1150) des wässrigen Mediums durch ein Wanderbettsystem konfiguriert ist;
wobei das zweite Volumen (42) zum Entgasen (1350) des wässrigen Mediums (5) konfiguriert ist; und
wobei das dritte Volumen (43) zum biologischen Filtern (1150) des wässrigen Mediums (5) durch ein Festbettsystem konfiguriert ist.

9. Reinigungssystem (10) nach Anspruch 3 oder 4, wobei
- mindestens ein erstes Volumen (41) für die Nitrifikation des wässrigen Mediums (5) konfiguriert ist;
- mindestens ein zweites Volumen (42) zum Entgasen des wässrigen Mediums (5) konfiguriert ist;
- mindestens ein drittes Volumen (43) für die Nitrifikation des wässrigen Mediums (5) konfiguriert ist;
- mindestens ein viertes Volumen (144) für die De-Nitrifikation des wässrigen Mediums (5) konfiguriert ist.

10. Reinigungssystem (10) nach Anspruch 3, wobei das erste Volumen (41) als ein Reaktortyp mit Wanderbett konfiguriert ist; das zweite Volumen (42) zum Entgasen des wässrigen Mediums (5) konfiguriert ist, wobei das zweite Volumen (42) sandwichartig zwischen zwei dritten Volumen (43) angeordnet ist, die jeweils als ein Reaktortyp mit Festbett konfiguriert sind; und wobei das vierte Volumen (144) zwischen den beiden dritten Volumen (43) angeordnet ist und zur De-Nitrifikation des wässrigen Mediums (5) konfiguriert ist.

11. Verfahren (1000) zum Reinigen eines wässrigen Mediums (5) aus einem Aquakultursystem (1) in einem Reinigungssystem (10) nach einem oder mehreren der Ansprüche 1 bis 10, das Verfahren (1000) umfassend die folgenden Schritte
- Bereitstellen (1050) des wässrigen Mediums (5) an einem Reinigungssystemeinlass (15) und in einem ersten Volumen (41), das im Wesentlichen von einem Ringabschnitt (20) umgeben ist, der ein zweites Volumen (42) aufweist;
- Überfließen (1300) und Trennen (1200) des wässrigen Mediums (5) radial vom ersten Volumen (41) zum zweiten Volumen (42) und einem dritten Volumen (43);
- und tangentiales Überfließen des wässrigen Mediums (5) aus dem dritten Volumen (43) in das zweite Volumen (42);
- Auslassen (1400) des nun gereinigten wässrigen Mediums (5) aus dem zweiten Volumen (42) durch einen Reinigungssystemauslass (16).

12. Verfahren (1000) nach Anspruch 11, wobei der Schritt des Bereitstellens (1050) des wässrigen Mediums (5) am Einlasspegel (17) auf einer Stufe oberhalb des ersten zweiten Überlaufpegels (45) durchgeführt wird und wobei der Vorgang des tangentialen Überlaufens des wässrigen Mediums (5) auf einer Stufe oberhalb des zweiten dritten Überlaufpegels (49) durchgeführt wird.

13. Verfahren (1000) nach Anspruch 11 oder 12, wobei die Schritte der Nitrifikation und De-Nitrifikation im Ringabschnitt (20) durchgeführt werden.

14. Rezirkulierendes Aquakultursystem (1), das System (1) umfassend
- ein Reinigungssystem (10) nach einem oder mehreren der Ansprüche 1 bis 10;
- mindestens ein Fischtank (500)
und wobei das Wasser zwischen dem mindestens einen Fischtank (500) und dem Reinigungssystem (10) rezirkuliert wird.

15. Rezirkulierendes Aquakultursystem (1) nach Anspruch 14, wobei jeder der mindestens einen Fischtanks (500) einen Fischtankauslass (520) aufweist, der mit dem Reinigungssystemeinlass (15) kommuniziert, und wobei der Reinigungssystemeinlasspegel auf einer Schwerkraftstufe liegt, die niedriger ist als ein Fischtankauslasspegel (525) jedes der mindestens einen Fischtanks (500); und wobei der Reinigungssystemauslass (16) mit einem Durchflussgeber (600) in jedem der mindestens einen Fischtanks (500) kommuniziert; wobei eine Pumpe (700) in der Verbindung zwischen dem Reinigungssystem (10) und den mindestens einen Fischtanks (500) vorhanden ist.

## Revendications

1. Système de nettoyage (10) configuré pour recevoir un milieu aqueux (5) provenant d'au moins un aquarium (500) et pour renvoyer un milieu aqueux nettoyé (5) vers ledit au moins un aquarium (500) ; le système de nettoyage (10) comprenant :
- une entrée de système de nettoyage (15) disposée à un niveau d'entrée de système de nettoyage (17) pour introduire le milieu aqueux (5) dans un premier volume (41) qui est sensiblement entouré par :
- une section annulaire (20) ayant un deuxième volume (42), et où le premier volume (41) et le deuxième volume (42) sont en communication par l'intermédiaire d'au moins un premier-deuxième niveleur de débordement (44) disposé à un niveau de premier-deuxième niveleur de débordement (45) et pour faire déborder radialement le milieu aqueux (5) du premier volume (41) au deuxième volume (42) ; dans lequel la section annulaire (20) est divisée en sections en arc (30) formant au moins un troisième volume supplémentaire (43) dans la section annulaire (20), où le premier volume (41) et le troisième volume (43) sont en communication par l'intermédiaire d'au moins un premier-troisième niveleur de débordement (46) disposé à un niveau de premier-troisième niveleur de débordement (47) et pour faire déborder radialement le milieu aqueux (5) du premier volume (41) au troisième volume (43) ; et le deuxième volume (42) et le troisième volume (43) sont en communication par l'intermédiaire d'au moins un deuxième-troisième niveleur de débordement (48) disposé à un niveau de deuxième-troisième niveleur de débordement (49) et pour faire déborder tangentiellement le milieu aqueux (5) du troisième volume (43) au deuxième volume (42) ; et
- une sortie de système de nettoyage (16) disposée dans la section annulaire (20) configurée pour évacuer (1400) le milieu aqueux désormais nettoyé (5) de la section annulaire (20).

2. Système de nettoyage (10) selon la revendication 1, dans lequel le niveau d'entrée de système de nettoyage (17) est au-dessus du niveau de premier-deuxième niveleur de débordement (45), qui est à nouveau au-dessus du niveau de deuxième-troisième niveleur de débordement (49).

3. Système de nettoyage (10) selon la revendication 1 ou 2, dans lequel la section annulaire (20) est divisée en sections en arc (30) formant au moins un quatrième volume supplémentaire (144) dans la section annulaire (20), où le premier volume (41) et le quatrième volume (144) sont en communication par l'intermédiaire d'au moins un premier-quatrième niveleur de débordement (145) disposé à un niveau de premier-quatrième niveleur de débordement (146) et pour faire déborder radialement le milieu aqueux (5) du premier volume (41) au quatrième volume (43).

4. Système de nettoyage (10) selon la revendication 3, dans lequel le troisième volume (43) et le quatrième volume (144) sont en communication par l'intermédiaire d'au moins un troisième-quatrième niveleur de débordement (147) disposé au niveau du troisième-quatrième niveleur de débordement (148) et pour faire déborder tangentiellement le milieu aqueux (5) du quatrième volume (144) au troisième volume (43).

5. Système de nettoyage (10) selon l'une quelconque ou plusieurs des revendications précédentes, dans lequel au moins un premier ou deuxième volume (41, 42) est configuré pour la filtration biologique (1150) du milieu aqueux (5) ; et dans lequel l'autre premier ou deuxième volume (41,42) est configuré pour dégazer le milieu aqueux (5).

6. Système de nettoyage (10) selon l'une quelconque ou plusieurs des revendications précédentes, dans lequel l'au moins un premier ou deuxième volume (41,42) est configuré avec des moyens de nitrification du milieu aqueux (5).

7. Système de nettoyage (10) selon l'une ou plusieurs des revendications précédentes, dans lequel la section annulaire (20) comprend au moins un volume pour la nitrification et un autre volume pour la dénitrification.

8. Système de nettoyage (10) selon l'une quelconque ou plusieurs des revendications 1 à 4, dans lequel le premier volume (41) est configuré pour une filtration biologique (1150) du milieu aqueux par un système à lit mobile ;
dans lequel le deuxième volume (42) est configuré pour dégazer (1350) le milieu aqueux (5) ; et
dans lequel le troisième volume (43) est configuré pour la filtration biologique (1150) du milieu aqueux (5) par un système à lit fixe.

9. Système de nettoyage (10) selon la revendication 3 ou 4, dans lequel
- au moins un premier volume (41) est configuré pour la nitrification du milieu aqueux (5) ;
- au moins un deuxième volume (42) est configuré pour dégazer le milieu aqueux (5) ;
- au moins un troisième volume (43) est configuré pour la nitrification du milieu aqueux (5) ;
- au moins un quatrième volume (144) est configuré pour la dénitrification du milieu aqueux (5).

10. Système de nettoyage (10) selon la revendication 3, dans lequel le premier volume (41) est configuré comme un réacteur de type à lit mobile ; le deuxième volume (42) est configuré pour dégazer le milieu aqueux (5), dans lequel le deuxième volume (42) est pris en sandwich entre deux troisièmes volumes (43), chacun étant configuré comme un réacteur de type à lit fixe ; et dans lequel le quatrième volume (144) est entre les deux troisièmes volumes (43) et configuré pour la dénitrification du milieu aqueux (5).

11. Procédé (1000) de nettoyage d'un milieu aqueux (5) provenant d'un système d'aquaculture (1) dans un système de nettoyage (10) selon une ou plusieurs des revendications 1 à 10, le procédé (1000) comprenant des actes
- de fourniture (1050) du milieu aqueux (5) à une entrée de système de nettoyage (15) et dans un premier volume (41) qui est sensiblement entouré par une section annulaire (20) ayant un deuxième volume (42) ;
- de débordement (1300) et de séparation (1200) du milieu aqueux (5) radialement du premier volume (41) vers le deuxième volume (42) et un troisième volume (43) ;
- et de débordement tangentiel du milieu aqueux (5) du troisième volume (43) vers le deuxième volume (42) ;
- d'évacuation (1400) du milieu aqueux (5) désormais nettoyé du deuxième volume (42) à travers une sortie du système de nettoyage (16).

12. Procédé (1000) selon la revendication 11, dans lequel l'acte de fourniture (1050) du milieu aqueux (5) au niveau d'entrée (17) est effectué à un niveau au-dessus du niveau de premier-deuxième niveleur de débordement (45), et dans lequel l'acte de débordement tangentiel du milieu aqueux (5) est effectué à un niveau au-dessus du niveau de deuxième-troisième niveleur de débordement (49).

13. Procédé (1000) selon la revendication 11 ou 12, dans lequel des actes de nitrification et de dénitrification sont effectués dans la section annulaire (20).

14. Système d'aquaculture à recirculation (1), le système (1) comprenant
- un système de nettoyage (10) selon l'une quelconque ou plusieurs des revendications 1 à 10 ;
- au moins un aquarium (500)
et dans lequel l'eau est recirculée entre l'au moins un aquarium (500) et le système de nettoyage (10).

15. Système d'aquaculture à recirculation (1) selon la revendication 14, dans lequel chacun des au moins un aquarium (500) a une sortie d'aquarium (520) en communication avec l'entrée de système de nettoyage (15) et où le niveau d'entrée de système de nettoyage est à un niveau gravitationnel qui est inférieur à un niveau de sortie d'aquarium (525) de chacun de l'au moins un aquarium (500) ; et laquelle sortie de système de nettoyage (16) est en communication avec un régulateur de débit (600) dans chacun des au moins un aquarium (500) ; dans lequel il y a une pompe (700) dans la communication entre le système de nettoyage (10) et l'au moins un aquarium (500).
